# EUROPEAN PATENT APPLICATION

(11) **EP 3 115 564 A1**
(43) Date of publication of application: **11.01.2017**
(21) Application number: 16176055.8
(22) Date of filing: 23.06.2016
(51) Int. Cl.: F01D 25/16

(54) **BEARING HOUSING AND RELATED BEARING ASSEMBLY FOR A GAS TURBINE ENGINE**

(30) Priority: 09.07.2015 IN 3521CH2015
(71) Applicant: General Electric Company, Schenectady, NY 12345 (US)
(72) Inventor: CARTER, Bruce Alan, Cincinnati, OH 45215 (US); GANIGER, Ravindra Shankar, 560066 Bangalore, Karnataka (IN); PRAVIN, Patil, 560066 Bangalore, Karnataka (IN); NAVARRO, Diego, 76146 Queretaro (MX)
(74) Representative: Williams, Andrew Richard

(57) **Abstract**

A bearing housing (102) for supporting a bearing (104) within a gas turbine engine may generally include a mounting flange (122) and a bearing support ring (120) positioned radially inwardly from the mounting flange (122). The bearing support ring (120) may be configured to at least partially surround an outer race (112) of the bearing (104). The bearing housing (102) may also include a support beam (134) spaced axially apart from the mounting flange (122) and the bearing ring (120), a plurality of inner spring fingers (130) extending axially between the bearing support ring (120) and the support beam (134) and a plurality of outer spring fingers (132) extending axially between the mounting flange (122) and the support beam (134). At least a portion of each inner spring finger (130) may be spaced apart radially from at least a portion of each outer spring finger (132). In addition, the inner spring fingers (130) may be circumferentially offset from the outer spring fingers (132).

## Description

### FIELD OF THE INVENTION

The present subject matter relates generally to gas turbine engines and, more particularly, to a bearing housing and a related bearing assembly for supporting a rotor shaft of a gas turbine engine.

### BACKGROUND OF THE INVENTION

Gas turbine engines typically include a rotor assembly, a compressor, and a turbine. The rotor assembly includes a fan that has an array of fan blades extending radially outward from a rotor shaft. The rotor shaft transfers power and rotary motion from the turbine to both the compressor and the fan and is supported longitudinally using a plurality of bearing assemblies. Known bearing assemblies include a bearing having rolling elements and a paired race, wherein the rolling elements are supported within the paired race. In addition, bearing assemblies typically include a bearing housing that at least partially encases or surrounds the outer circumference of the bearing.

As is generally understood, the bearing assemblies supporting the rotor shaft must be accommodated with a limited radial space defined within the gas turbine engine. To reduce radial space requirements, previous attempts have been made to integrate portions of the bearing into its corresponding bearing housing. For example, bearing assemblies are known that include an outer race that is formed integrally with the bearing housing. Unfortunately, such integrated bearing designs significantly increase the costs of manufacturing the associated assembly components.

Moreover, to accommodate radial loading within the engine, many conventional bearing housings include a "U-shaped" radial spring arrangement having inner and outer radial "spring" fingers that are circumferentially aligned with one another around the circumference of the housing. These circumferentially aligned spring fingers are configured to dampen radial loads transmitted through the housing. Unfortunately, due to the configuration of such bearing housings, a significant radial gap is typically defined between each pair of circumferentially aligned spring fingers due to the manufacturing methods that must be utilized to machine the housings. As a result, the overall radial dimension of conventional bearing housings is often larger than is desired given the space requirements within the engine.

Accordingly, a bearing assembly that allows for reduced components costs and/or that provides for a reduced radial profile within the engine as compared to conventional bearing assemblies would be welcomed within the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a bearing assembly for a gas turbine engine. The bearing assembly may generally include a bearing having an outer race and an inner race. The bearing assembly may also include a bearing housing extending radially between an inner end and an outer end. The bearing housing may include a mounting flange disposed at or adjacent to the outer end and a bearing support ring disposed at or adjacent to the inner end. The bearing support ring may be configured to at least partially surround the outer race of the bearing. The bearing housing may also include a plurality of inner spring fingers extending axially between the bearing support ring and a support beam of the bearing housing and a plurality of outer spring fingers extending axially between the mounting flange and the support beam. At least a portion of each inner spring finger may be spaced apart radially from at least a portion of each outer spring finger. In addition, the inner spring fingers may be circumferentially offset from the outer spring fingers.

In another aspect, the present subject matter is directed to a bearing housing for supporting a bearing within a gas turbine engine. The bearing housing may generally include a mounting flange and a bearing support ring positioned radially inwardly from the mounting flange. The bearing support ring may be configured to at least partially surround an outer race of the bearing. The bearing housing may also include a support beam spaced axially apart from the mounting flange and the bearing ring, a plurality of inner spring fingers extending axially between the bearing support ring and the support beam and a plurality of outer spring fingers extending axially between the mounting flange and the support beam. At least a portion of each inner spring finger may be spaced apart radially from at least a portion of each outer spring finger. In addition, the inner spring fingers may be circumferentially offset from the outer spring fingers.

In a further aspect, the present subject matter is directed to a gas turbine engine. The gas turbine engine may generally include a rotor shaft, a support frame positioned radially outwardly from the rotor shaft and a bearing assembly configured to rotationally support the rotor shaft relative to the support frame. The bearing assembly may generally include a bearing having an outer race and an inner race. The inner race may be configured to be coupled to the rotor shaft. The bearing assembly may also include a bearing housing extending radially between an inner end and an outer end. The bearing housing may include a mounting flange disposed at or adjacent to the outer end that is configured to be coupled to the support frame and a bearing support ring disposed at or adjacent to the inner end. The bearing support ring may be configured to at least partially surround the outer race of the bearing. The bearing housing may further include a plurality of inner spring fingers extending axially between the bearing support ring and a support beam of the bearing housing and a plurality of outer spring fingers extending axially between the mounting flange and the support beam. At least a portion of each inner spring finger may be spaced apart radially from at least a portion of each outer spring finger. In addition, the inner spring fingers may be circumferentially offset from the outer spring fingers.

In yet another aspect, the present subject matter is directed to a bearing assembly for a gas turbine engine. The bearing assembly may generally include a bearing having an outer race and an inner race. The bearing assembly may also include a bearing housing configured to at least partially surround the outer race of the bearing. The bearing assembly may be formed from a material that has a different coefficient of thermal expansion than the coefficient of thermal expansion of the material used to form the inner race and/or the outer race.

These and other features, aspects and advantages of the present invention will be better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a cross-sectional view of one embodiment of a gas turbine engine that may be utilized within an aircraft in accordance with aspects of the present subject matter;
FIG. 2 illustrates a cross-sectional view of one embodiment of a bearing assembly configured for use within a gas turbine engine in accordance with aspects of the present subject matter;
FIG. 3 illustrates a perspective view of a bearing housing of the bearing assembly shown in FIG. 2;
FIG. 4 illustrates a partial perspective view of the bearing housing shown in FIG. 3;
FIG. 5 illustrates a top view of a portion of the bearing housing shown in FIG. 3;
FIG. 6 illustrates a partial perspective view of another embodiment of a bearing housing in accordance with aspects of the present subject matter;
FIG. 7 illustrates a cross-sectional side view of the bearing housing shown in FIG. 6 taken about line 7-7;
FIG. 8 illustrates a partial perspective view of a further embodiment of a bearing housing in accordance with aspects of the present subject matter, particularly illustrating a slight variation of the configuration of the bearing housing shown in FIGS. 6 and 7;
FIG. 9 illustrates a partial perspective view of yet another embodiment of a bearing housing in accordance with aspects of the present subject matter;
FIG. 10 illustrates a cross-sectional side view of the bearing housing shown in FIG. 9 taken about line 10-10;
FIG. 11 illustrates a partial perspective view of an even further embodiment of a bearing housing in accordance with aspects of the present subject matter, particularly illustrating a slight variation of the configuration of the bearing housing shown in FIGS. 9 and 10;
FIG. 12 illustrates a partial perspective view of another embodiment of a bearing housing in accordance with aspects of the present subject matter;
FIG. 13 illustrates a cross-sectional side view of the bearing housing shown in FIG. 12 taken about line 12-12; and

FIG. 14 illustrates a partial perspective view of a further embodiment of a bearing housing in accordance with aspects of the present subject matter, particularly illustrating a slight variation of the configuration of the bearing housing shown in FIGS. 12 and 13.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to an improved bearing assembly for use within a gas turbine engine. Specifically, in several embodiments, the bearing assembly may include a bearing and a separate bearing housing configured to at least partially encase or surround the bearing around its outer circumference. The bearing housing may include an outer mounting flange configured to couple the housing to corresponding support structure of the engine and an inner bearing ring configured to be coupled to an outer race of the bearing. In addition, the bearing housing may include a plurality of inner spring fingers extending axially from the inner bearing ring and a plurality of outer spring fingers extending axially from the outer mounting flange, with the inner and outer spring fingers terminating at an annular support ring of the bearing housing. As will be described below, the inner and outer spring fingers may be circumferentially offset from one another. Specifically, in several embodiments, the spring fingers may be provided in an alternating circumferential arrangement such that each pair of adjacent inner spring fingers is separated in the circumferential direction by an outer spring finger.

It should be appreciated that, by configuring the bearing housing as a completely separate component from the bearing (including the outer race), the disclosed housing may have reduced design complexity, thereby reducing the overall costs associated with manufacturing the bearing assembly components. Moreover, by configuring the bearing housing to including circumferentially offset inner and outer spring fingers, the radial gap defined between the inner and outer spring fingers may be reduced significantly, thereby allowing the outer mounting flange to be positioned radially closer to the inner bearing ring. As a result, the bearing housing may be accommodated within the tight radial space provided within the gas turbine engine. In addition, given the reduced radial dimension of the bearing housing, the overall weight of the housing may also be reduced.

Additionally, as will be described below, the bearing housing may, in several embodiments, be formed from a material that has a coefficient of thermal expansion that differs from the coefficient of thermal expansion of the material used to form one or more components of the bearing (e.g., the inner and outer races). For instance, in one embodiment, the bearing housing may be formed from a material (e.g., titanium) that has a lower coefficient of thermal expansion than the material (e.g., steel) used to form the bearing component(s). Thus, as the bearing assembly components heat up during engine operation, the lower coefficient of thermal expansion may allow the bearing housing to tighten around the outer circumference of the bearing as it expands radially outwardly, thereby providing an increased fit pressure at the interference fit defined between the housing and the outer race of the bearing. The increased fit pressure may allow a reduction in the operating clearance of the rolling elements to the raceways during operation of the gas turbine.

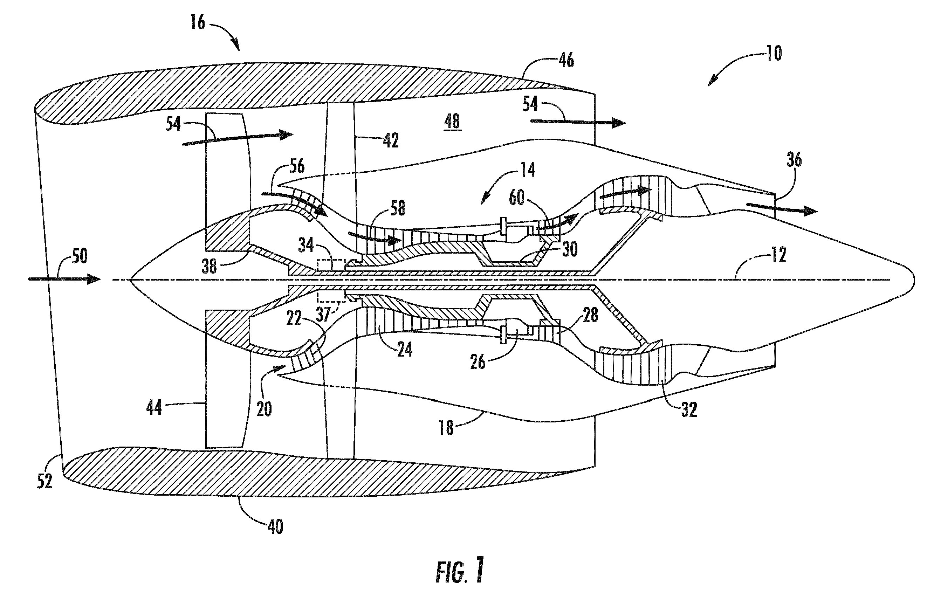

Referring now to the drawings, FIG. 1 illustrates a cross-sectional view of one embodiment of a gas turbine engine 10 that may be utilized within an aircraft in accordance with aspects of the present subject matter, with the engine 10 being shown having a longitudinal or axial centerline axis 12 extending therethrough for reference purposes. In general, the engine 10 may include a core gas turbine engine (indicated generally by reference character 14) and a fan section 16 positioned upstream thereof. The core engine 14 may generally include a substantially tubular outer casing 18 that defines an annular inlet 20. In addition, the outer casing 18 may further enclose and support a booster compressor 22 for increasing the pressure of the air that enters the core engine 14 to a first pressure level. A high pressure, multi-stage, axial-flow compressor 24 may then receive the pressurized air from the booster compressor 22 and further increase the pressure of such air. The pressurized air exiting the highpressure compressor 24 may then flow to a combustor 26 within which fuel is injected into the flow of pressurized air, with the resulting mixture being combusted within the combustor 26. The high energy combustion products are directed from the combustor 26 along the hot gas path of the engine 10 to a first (high pressure) turbine 28 for driving the high pressure compressor 24 via a first (high pressure) drive shaft 30, and then to a second (low pressure) turbine 32 for driving the booster compressor 22 and fan section 16 via a second (low pressure) drive shaft 34 that is generally coaxial with first drive shaft 30. After driving each of turbines 28 and 32, the combustion products may be expelled from the core engine 14 via an exhaust nozzle 36 to provide propulsive jet thrust.

Additionally, as shown in FIG. 1, the fan section 16 of the engine 10 may generally include a rotatable, axial-flow fan rotor assembly 38 that configured to be surrounded by an annular fan casing 40. It should be appreciated by those of ordinary skill in the art that the fan casing 40 may be configured to be supported relative to the core engine 14 by a plurality of substantially radially-extending, circumferentially-spaced outlet guide vanes 42. As such, the fan casing 40 may enclose the fan rotor assembly 38 and its corresponding fan rotor blades 44. Moreover, a downstream section 46 of the fan casing 40 may extend over an outer portion of the core engine 14 so as to define a secondary, or by-pass, airflow conduit 48 that provides additional propulsive jet thrust.

It should be appreciated that, in several embodiments, the second (low pressure) drive shaft 34 may be directly coupled to the fan rotor assembly 38 to provide a direct-drive configuration. Alternatively, the second drive shaft 34 may be coupled to the fan rotor assembly 38 via a speed reduction device 37 (e.g., a reduction gear or gearbox) to provide an indirect-drive or geared drive configuration. Such a speed reduction device(s) may also be provided between any other suitable shafts and/or spools within the engine as desired or required.

During operation of the engine 10, it should be appreciated that an initial air flow (indicated by arrow 50) may enter the engine 10 through an associated inlet 52 of the fan casing 40. The air flow 50 then passes through the fan blades 44 and splits into a first compressed air flow (indicated by arrow 54) that moves through conduit 48 and a second compressed air flow (indicated by arrow 56) which enters the booster compressor 22. The pressure of the second compressed air flow 56 is then increased and enters the high pressure compressor 24 (as indicated by arrow 58). After mixing with fuel and being combusted within the combustor 26, the combustion products 60 exit the combustor 26 and flow through the first turbine 28. Thereafter, the combustion products 60 flow through the second turbine 32 and exit the exhaust nozzle 36 to provide thrust for the engine 10.

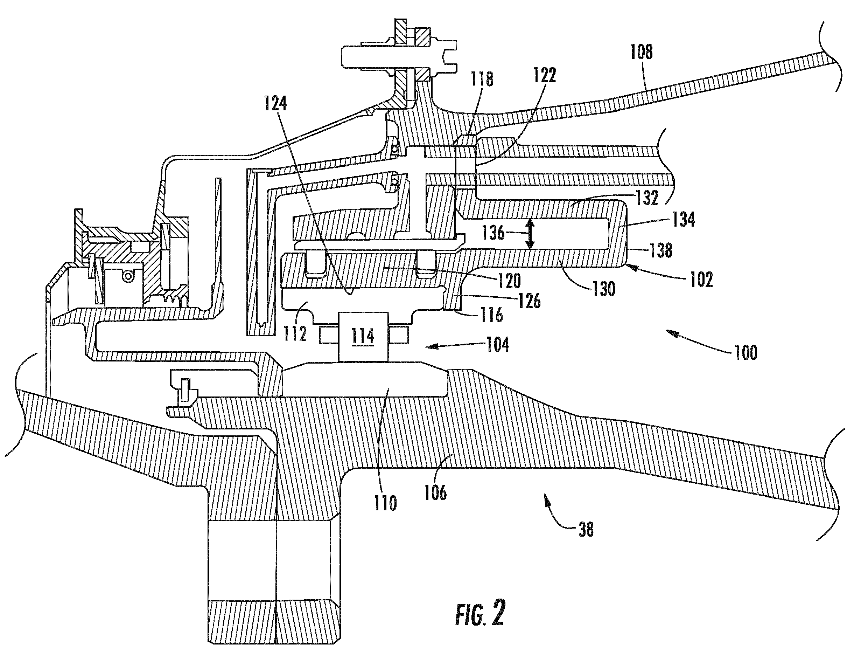

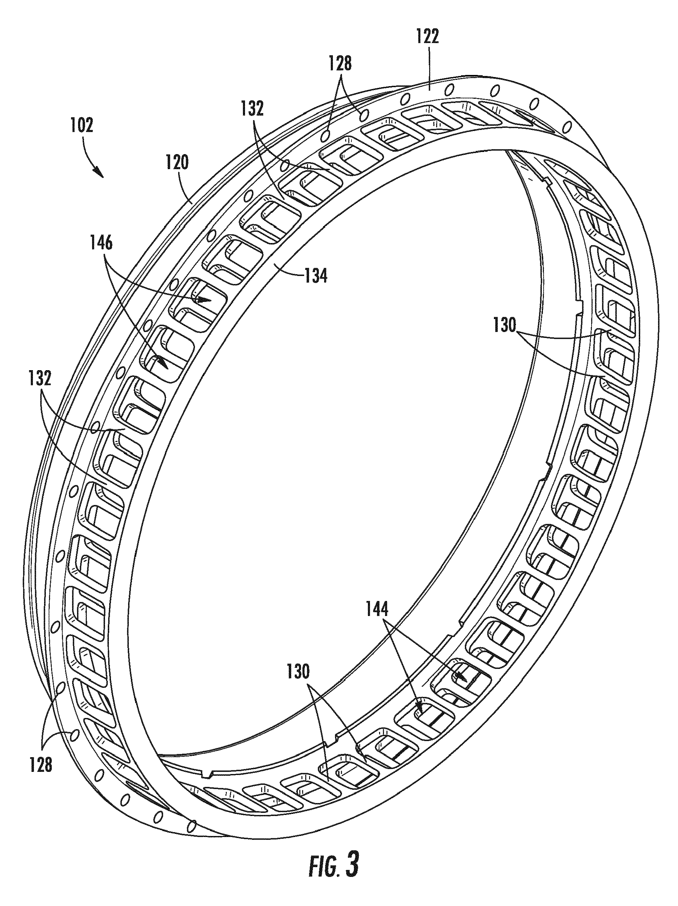

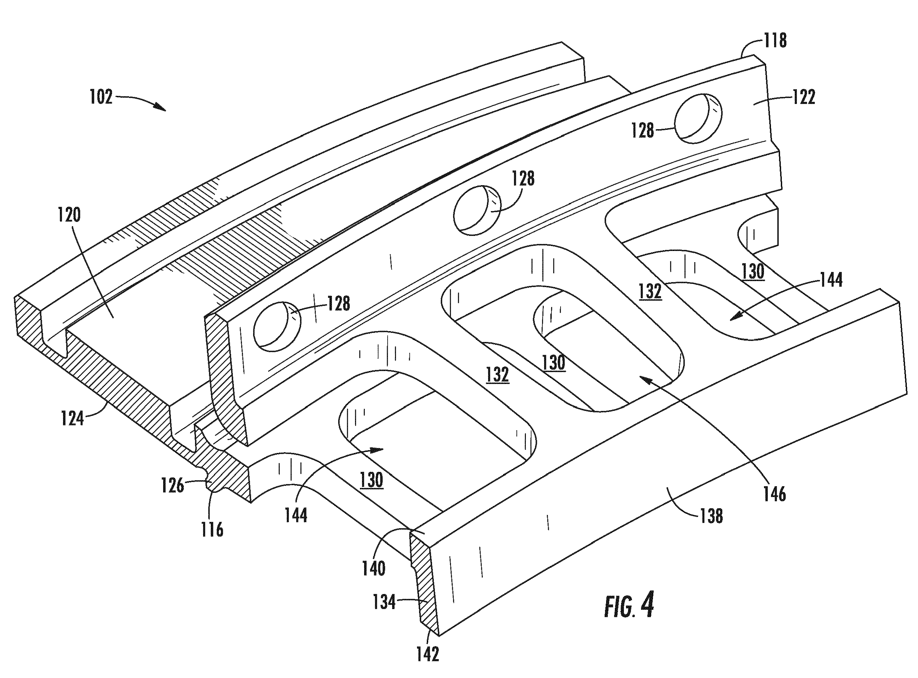

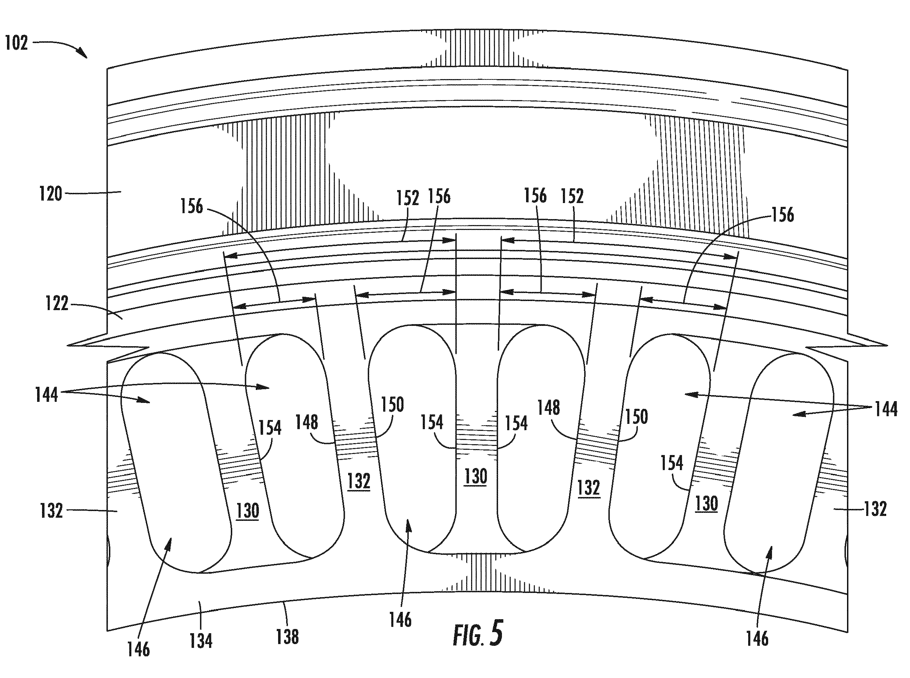

Referring now to FIGS. 2-5, various views of one embodiment of a bearing assembly 100 and related components suitable for use within a gas turbine engine 10 are illustrated in accordance with aspects of the present subject matter. Specifically, FIG. 2 illustrates a cross-sectional view of the bearing assembly 100 installed within the gas turbine engine 10. FIG. 3 illustrates a perspective view of a bearing housing 102 of the bearing assembly 100 shown in FIG. 2. FIG. 4 illustrates a perspective view of a portion of the bearing housing 102 shown in FIG. 3. Additionally, FIG. 5 illustrates a top view of a portion of the bearing housing 102 shown in FIG. 3.

As particularly shown in FIG. 2, the bearing assembly 100 may generally include a bearing 104 and a bearing housing 102 extending radially between a rotor shaft 106 of the rotor assembly 38 (FIG. 1) and a corresponding structural support frame 108 of the engine 10. In general, the bearing assembly 100 may be configured to rotationally support the rotor shaft 106 relative to the support frame 108. As shown in the illustrated embodiment, the bearing assembly 100 is configured to be positioned at the number one bearing position within the gas turbine engine 10. However, in other embodiments, the bearing assembly 100 may be configured to be located at any other suitable location within the gas turbine engine 10 so as to allow a rotating component of the engine 10 to be rotationally supported relative to a stationary component of the engine 10.

In general, the bearing 104 of the bearing assembly 100 may have any suitable bearing configuration that allows it to function as described herein. For instance, as shown in FIG. 2, the bearing 104 may include an inner race 110 coupled (directly or indirectly) to the rotor shaft 106, an outer race 112 positioned radially outwardly from the inner race 110 and a plurality of rolling elements 114 (only one of which is shown) disposed between the inner and outer races 110, 112. The rolling elements 114 may generally correspond to any suitable bearing elements, such as balls or rollers. In one embodiment, each bearing race 110, 112 may have a unitary race configuration. Alternatively, the inner race 110 and/or the outer race 112 may have a split race configuration such that the bearing race(s) 110, 112 includes both an axially forward race portion (not shown) and an axially aft race portion (not shown) configured to support the rolling elements 114.

As shown in FIGS. 2-5, the bearing housing 102 may generally extend radially between an inner end 116 and an outer end 118, with the housing 102 including a bearing support ring 120 disposed at or adjacent to its inner end 116 and a mounting flange 122 disposed at or adjacent to its outer end 118. In general, the bearing support ring 120 may be configured to interface with and/or be coupled to the outer race 112 of the bearing 104. For example, as particularly shown in FIG. 2, the bearing support ring 120 may define an inner circumferential surface 124 configured to contact or otherwise be disposed adjacent to the outer race 112 such that the bearing support ring extends around the entire outer circumference of the bearing 104.

In addition, the bearing support ring 120 may include or may be associated with suitable retention features for axially retaining the bearing 104 relative to the bearing housing 102. For instance, as shown in FIG. 2, the bearing support ring 120 may include a lip 126 configured to extend radially along the aft side of the outer race 112 so as to prevent movement of the bearing 104 in the axially aft direction relative to the bearing housing 102.

As shown in FIG. 2, in several embodiments, the bearing housing 102 may be configured to be coupled to the support frame 108 of the engine 10 via the mounting flange 122 disposed at or adjacent to the outer end 118 of the housing 102. In general, the mounting flange 122 may be configured to be coupled to the support frame 108 using any suitable attachment means. For instance, as particularly shown in FIGS. 3 and 4, the mounting flange 122 may define a plurality of axially extending openings 128 for receiving suitable attachment devices for coupling the mounting flange 122 to the support frame 108. For example, in one embodiment, bolts or other suitable mechanical fasteners may be inserted through the openings 128 to allow the bearing housing 102 to be coupled to the support frame 108.

Additionally, the bearing housing 102 may also include a plurality of axially extending spring fingers 130, 132. Specifically, as shown in the illustrated embodiment, the bearing housing 102 includes a plurality of inner spring fingers 130 extending axially from the bearing support ring 120 to an annular support beam 134 of the bearing housing 102 located axially aft of both the bearing support ring 120 and the mounting flange 122. Moreover, the bearing housing 102 includes a plurality of outer spring fingers 132 extending axially from the mounting flange 122 to the support beam 134. As particularly shown in FIG. 2, the outer spring fingers 132 may be disposed radially outwardly relative to the inner spring fingers 130 such that a radial gap 136 is defined between the inner and outer spring fingers 130, 132, with the annular support beam 134 being configured to span the radial gap at the aft ends of the spring fingers 130, 132 in order to couple the inner spring fingers 130 to the outer spring fingers 132. As will be described below, due to the configuration of the disclosed bearing housing 102, such radial gap 126 may be substantially smaller than that provided by conventional bearing housings, thereby allowing for the overall radial height of the bearing housing 102 to be reduced significantly.

It should be appreciated that the annular support beam 134 may generally be configured to extend radially between the inner and outer spring arms along an aft end 138 of the bearing housing 102 between a radially inner surface 140 (FIG. 4) and a radially outer surface 142 (FIG. 4). Additionally, as particularly shown in FIG. 3, the support beam 134 may generally be configured to extend circumferentially about a central axis (not shown) of the bearing assembly 100 such that the beam 132 forms a ring-like shape at the aft end 138 of the bearing housing 102.

In several embodiments, the inner spring fingers 130 may be circumferentially spaced apart from one another around the inner circumference of the bearing housing 102. For example, as particularly shown in FIGS. 4 and 5, each pair of adjacent inner spring fingers 130 may be spaced apart circumferentially such that an inner cavity or pocket 144 is defined between the adjacent inner spring fingers 130 that extends axially between the bearing support ring 120 and the support beam 134. Similarly, the outer spring fingers 132 may be circumferentially spaced apart from one another around the outer circumference of the bearing housing 102. For example, as particularly shown in FIGS. 4 and 5, each pair of adjacent outer spring fingers 132 may be spaced apart circumferentially such that an outer cavity or pocket 146 is defined between the adjacent outer spring fingers 132 that extends axially between the mounting flange 122 and the support beam 134.

Moreover, in accordance with aspects of the present subject matter, the inner and outer spring fingers 130, 132 may be configured to be circumferentially offset relative to one another. For instance, in several embodiments, the outer spring fingers 132 may be circumferentially offset from the inner spring fingers 130 such that each outer spring finger 132 is circumferentially aligned with the inner pocket 144 defined between each corresponding pair of adjacent inner spring fingers 130. In such embodiments, the outer spring fingers 132 may be positioned relative to the inner spring fingers 130 such that first and second circumferential sides 148, 150 of each outer spring finger 132 are both disposed within a circumferential distance 152 defined between opposed circumferential edges 154 of each inner pocket 144. As a result, the inner and outer spring fingers 130, 132 may be completely offset from one another in the circumferential direction (i.e., such that no circumferential overlap exists between the inner and outer spring fingers 130 132).

For instance, in one embodiment, each outer spring finger 132 may be aligned with the center of each inner pocket 144 defined between the inner spring fingers 130. Specifically, as shown in FIG. 5, each outer spring finger 132 may be centrally aligned with each inner pocket 144 such that a circumferential distance 156 defined between each outer spring finger 132 and the adjacent circumferential edges 154 of each inner pocket 144 is the same or substantially the same along both circumferential sides 148, 150 of the outer spring finger 132. However, in other embodiments, the outer spring fingers 132 may be circumferentially offset relative to the inner spring fingers 130 in any other suitable manner.

It should be appreciated that, by circumferentially offsetting the spring fingers 130, 132 in the manner described above, the radial gap 136 defined between the inner and outer spring fingers 130, 132 may be reduced significantly as compared to conventional bearing housings that have circumferentially aligned spring fingers.

Specifically, for conventional bearing housings, the radial space defined directly between the circumferentially aligned spring fingers is formed by machining away the material contained within such space, which results in a radial gap defined between the spring fingers that is dependent on the tooling used for machining. However, the circumferential positioning of the spring fingers 130, 132 described herein may allow the inner and outer spring fingers 130, 132 to be machined separately without requiring any tooling to be positioned directly between the inner and outer spring fingers 130, 132, thereby allowing the spring fingers 130, 132 to be formed with a significantly reduced radial gap 136 defined therebetween. Such a reduced radial gap 136 may not only reduce the overall radial height of the bearing housing 102, but may also reduce the total amount of material required to form the bearing housing 102, thereby reducing its overall weight.

It should be appreciated that, as shown in the illustrated embodiment, the bearing housing 102 may be formed as a single unitary component that is separate from the bearing 104. Specifically, in several embodiments, the various features of the bearing housing 102 (e.g., the bearing support ring 120, the mounting flange 122, the spring fingers 130, 132 and the support beam 134) may all be formed integrally so as to form a single unitary component. Alternatively, one or more of the various features of the bearing housing 102 may be formed separately from other features of the bearing housing 102 such that the separately formed feature(s) must be coupled to one another to form the complete bearing housing 102.

Additionally, as indicated above, the bearing housing 102 may, in several embodiments, be formed from a material having a coefficient of thermal expansion that differs from the coefficient of thermal expansion of the material used to form one or more of the bearing components. For instance, in a particular embodiment, the material used to form the bearing housing 102 may have a lower coefficient of thermal expansion than that of the material used to form the bearing component(s). As such, the bearing housing 102 may thermally expand at a differing rate than the bearing 104, thereby providing unique advantages to the disclosed bearing assembly 100. For instance, as the temperature within the gas turbine engine 10 increases during operation, the lower coefficient of thermal expansion may result in a tighter fit (i.e., a higher fit pressure) at the inference fit location defined between the bearing support ring 120 and the outer race 112 of the bearing 104 as the as the bearing 104 expands radially outwardly. Such a higher fit pressure reduces the internal radial clearance (IRC) for the bearing 104 during engine operation allowing achievement of the intended bearing operating clearance for reduced vibration of the gas turbine engine. Moreover, by selecting a material for the bearing housing 102 that has a lower coefficient of thermal expansion than that of the bearing component material(s), the bearing housing 102 may be designed to allow for an increased IRC at turbine assembly temperatures (e.g., at room temperate conditions), thereby allowing the disclosed bearing assembly 100 to be assembled more easily and lowering the risk of damage to the bearing rolling elements 114 during the assembly process.

It should be appreciated that, in general, the bearing housing 102 and the bearing component(s) may be formed from any suitable material(s) that allows such components to function as described herein. However, in a particular embodiment of the present subject matter, the bearing housing 102 may be formed from titanium while the various bearing components (e.g., the inner and outer races 110, 112) may be formed from steel (e.g., M50 bearing steel). In such an embodiment, in addition to having a lower coefficient of thermal expansion as compared to steel, the titanium may also provide a relatively lightweight material for the bearing housing 102, thereby allowing for a reduction in the overall weight of the assembly 100.

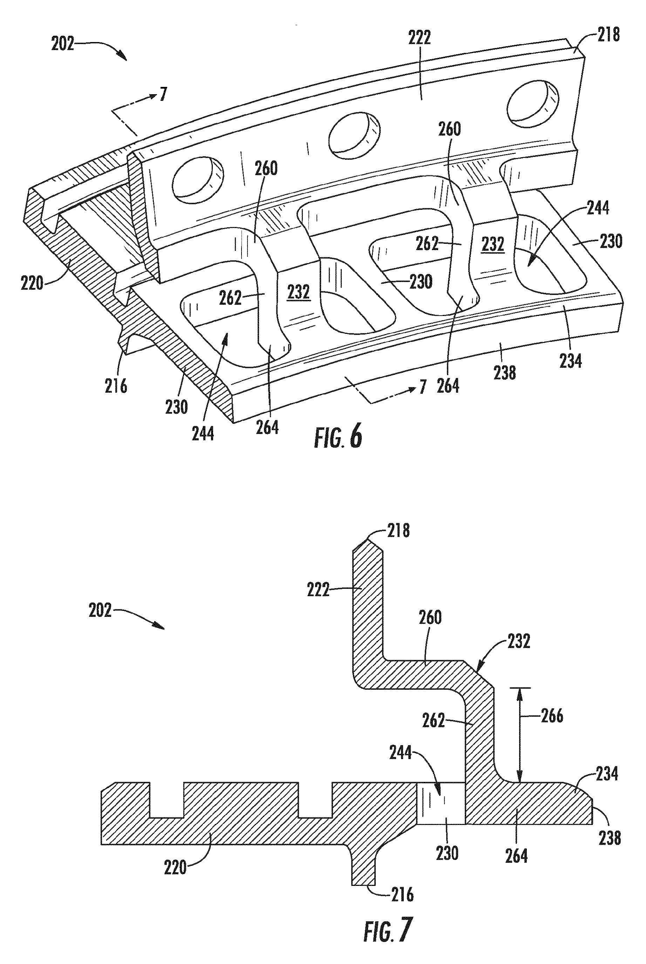

Referring now to FIGS. 6 and 7, differing views of another embodiment of a bearing housing 202 that may be utilized within the disclosed bearing assembly 100 are illustrated in accordance with aspects of the present subject matter. Specifically, FIG. 6 illustrates a partial perspective view of the bearing housing 202 and FIG. 7 illustrates a cross-sectional side view of the bearing housing 202 shown in FIG. 6 taken about line 7-7.

As shown, the bearing housing 202 may be configured similarly to the bearing housing 102 described above with reference to FIGS. 2-5. For instance, the bearing housing 202 may generally extend radially between an inner end 216 and an outer end 218, with the bearing housing 202 including both a bearing support ring 220 disposed at or adjacent to its inner end 216 that is configured to surround the outer race 112 of the bearing 104 (FIG. 2) and a mounting flange 222 disposed at or adjacent to its outer end 218 for coupling the bearing housing 202 to the support frame 108 (FIG. 2) of the engine 10. In addition, the bearing housing 202 may include a plurality of inner spring fingers 230 and a plurality of outer spring fingers 232, with the inner spring fingers 230 extending axially between the bearing support ring 220 and a corresponding annular support beam 234 positioned at an aft end 238 of the bearing housing 202 and the outer spring fingers 232 extending axially between the mounting flange 222 and the support beam 234. Moreover, as particularly shown in FIG. 6, the inner spring fingers 230 may be configured to be circumferentially offset from the outer spring fingers 232.

However, unlike the embodiment described above with reference to FIGS. 2-5, each outer spring finger 232 may also be configured to extend radially between the mounting flange 222 and the support beam 234. Specifically, as shown in the illustrated embodiment, each outer spring finger 232 may include a first axial portion 260 extending axially aft from the mounting flange 222, a radial portion 262 extending radially inwardly from the first axial portion 260 in the direction of the inner spring fingers 230, and a second axial portion 264 extending axially between the radial portion 262 and the support beam 234. In such an embodiment, the first axial portion 260 of each outer spring finger 232 may be spaced apart radially from the adjacent inner spring fingers 230 while the second axial portion 264 of each outer spring finger 232 may be configured to radially overlap at least a portion of the adjacent inner spring fingers 230. For instance, a height 266 of the radial portion 262 may be selected such that the second axial portion 264 of each outer spring finger 232 is radially aligned with the portion of the adjacent inner spring fingers 230 extending axially adjacent to the aft end 238 of the bearing housing 202. Thus, as shown in FIG. 6, each outer spring finger 232 may be configured to extend radially into the inner pocket 244 defined between each pair of adjacent inner spring fingers 230 so that the second axial portion 264 of each outer spring finger 232 extends axially within the inner pocket 244 between its radial portion 262 and the support beam 234. Additionally, as shown in FIGS. 6 and 7, given the configuration of the outer spring fingers 232, the annular support beam 234 may generally be configured to be radially aligned with the inner spring fingers 232 along the inner circumference of the bearing housing 202.

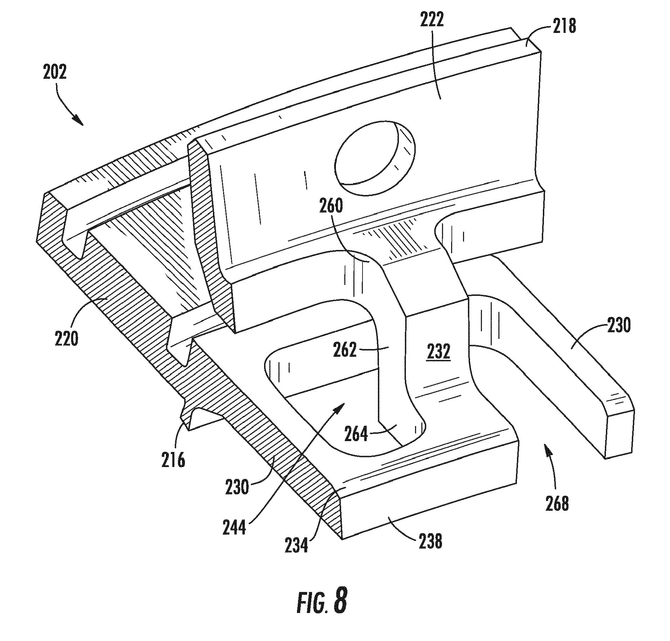

Referring now to FIG. 8, a perspective view of a further embodiment of a bearing housing 202 that may be utilized within the disclosed bearing assembly 100 is illustrated in accordance with aspects of the present subject matter. Specifically, FIG. 8 illustrates a slight variation of the embodiment of the bearing housing 202 shown in FIGS. 6 and 7 and, as a result, the same reference characters are used in FIGS. 6-8 to identify corresponding components of the housing 202. As shown in FIG. 8, unlike the embodiment shown in FIGS. 6 and 7, the support beam 234 is segmented around its circumference such that each inner pocket 244 defined between each pair of adjacent inner spring fingers 230 is open to the aft end 238 of the bearing housing 202. For example, as shown in the illustrated embodiment, the support beam 234 is segmented such that channels 268 are defined along one of the sides of each outer spring finger 232 that extend between each inner pocket 244 and the aft end 238 of the bearing housing 202. Alternatively, the support beam 234 may be segmented such that channels 268 are defined along both sides of each outer spring finger 232 that extend between each inner pocket 244 and the aft end 238 of the bearing housing 202.

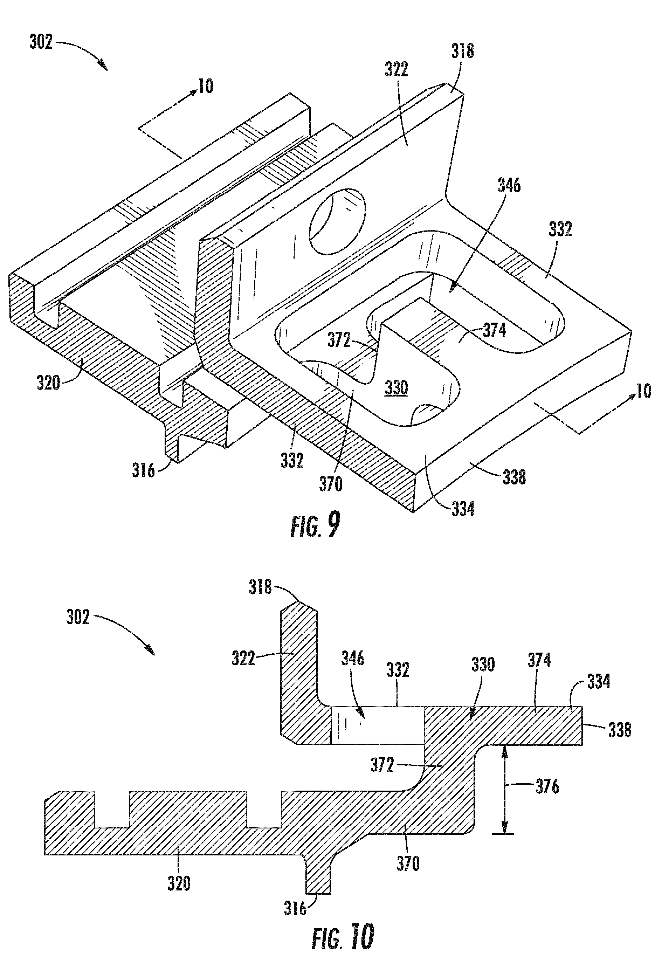

Referring now to FIGS. 9 and 10, differing views of yet another embodiment of a bearing housing 302 that may be utilized within the disclosed bearing assembly 100 are illustrated in accordance with aspects of the present subject matter. Specifically, FIG. 9 illustrates a partial perspective view of the bearing housing 302 and FIG. 10 illustrates a cross-sectional side view of the bearing housing 302 shown in FIG. 9 taken about line 9-9.

As shown, the bearing housing 302 may be configured similarly to the bearing housing 102, 202 described above with reference to FIGS. 2-8. For instance, the bearing housing 302 may generally extend radially between an inner end 316 and an outer end 318, with the bearing housing 302 including both a bearing support ring 320 disposed at or adjacent to its inner end 316 that is configured to surround the outer race 112 of the bearing 104 (FIG. 2) and a mounting flange 322 disposed at or adjacent to its outer end 318 for coupling the bearing housing 302 to the support frame 108 (FIG. 2) of the engine 10. In addition, the bearing housing 302 may include a plurality of inner spring fingers 330 and a plurality of outer spring fingers 332, with the inner spring fingers 330 extending axially between the bearing support ring 320 and a corresponding annular support beam 334 positioned at an aft end 338 of the bearing housing 302 and the outer spring fingers 332 extending axially between the mounting flange 322 and the support beam 334. Moreover, as particularly shown in FIG. 9, the inner spring fingers 330 may be configured to be circumferentially offset from the outer spring fingers 332.

However, unlike the embodiments described above with reference to FIGS. 6-8, each inner spring finger 330 may also be configured to extend radially between the bearing support ring 320 and the support beam 334. Specifically, as shown in the illustrated embodiment, each inner spring finger 330 may include a first axial portion 370 extending axially aft from the bearing support ring 320, a radial portion 372 extending radially outwardly from the first axial portion 370 in the direction of the outer spring fingers 332, and a second axial portion 374 extending axially between the radial portion 272 and the support beam 234. In such an embodiment, the first axial portion 370 of each inner spring finger 330 may be spaced apart radially from the adjacent outer spring fingers 332 while the second axial portion 374 of each inner spring finger 330 may be configured to radially overlap at least a portion of the adjacent inner spring fingers 330. For instance, a height 376 of the radial portion 372 may be selected such that the second axial portion 374 of each inner spring finger 330 is radially aligned with the portion of the adjacent outer spring fingers 332 extending axially adjacent to the aft end 338 of the bearing housing 302. Thus, as shown in FIG. 9, each inner spring finger 330 may be configured to extend radially into the outer pocket 346 defined between each pair of adjacent outer spring fingers 332 so that the second axial portion 374 of each inner spring finger 330 extends axially within the outer pocket 346 between its radial portion 372 and the support beam 334. Additionally, as shown in FIGS. 9 and 10, given the configuration of the inner spring fingers 330, the support beam 334 may generally be configured to be radially aligned with the outer spring fingers 332 along the outer circumference of the bearing housing 302.

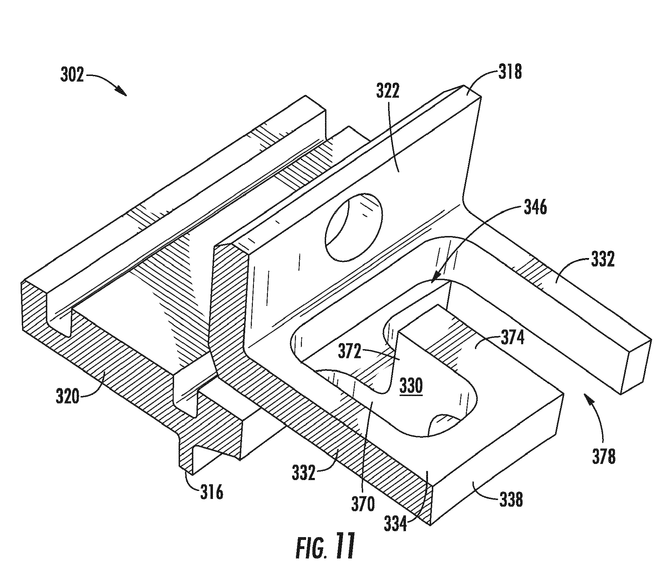

Referring now to FIG. 11, a perspective view of a further embodiment of a bearing housing 302 that may be utilized within the disclosed bearing assembly 100 is illustrated in accordance with aspects of the present subject matter. Specifically, FIG. 11 illustrates a slight variation of the embodiment of the bearing housing 302 shown in FIGS. 9 and 10 and, as a result, the same reference characters are used in FIGS. 9-11 to identify corresponding components of the housing 302. As shown in FIG. 11, unlike the embodiment shown in FIGS. 9 and 10, the support beam 334 is segmented around its circumference such that each outer pocket 346 defined between each pair of adjacent outer spring fingers 332 is open to the aft end 338 of the bearing housing 302. For example, as shown in the illustrated embodiment, the support beam 334 is segmented such that channels 378 are defined along one of the sides of each inner spring finger 330 that extend between each outer pocket 346 and the aft end 338 of the bearing housing 302. Alternatively, the support beam 334 may be segmented such that channels 378 are defined along both sides of each inner spring finger 330 that extend between each outer pocket 346 and the aft end 338 of the bearing housing 302.

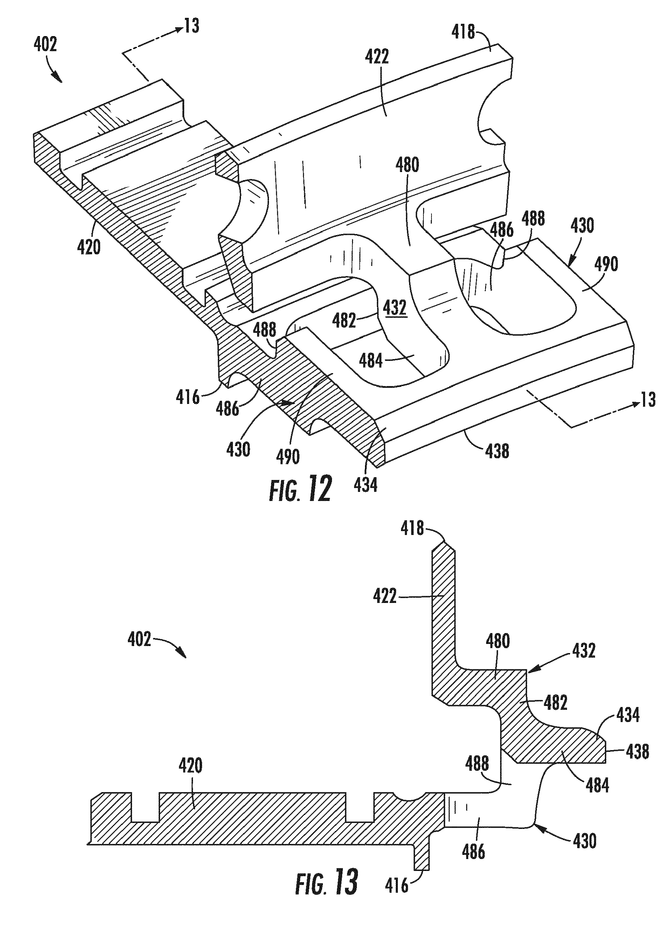

Referring now to FIGS. 12 and 13, differing views of another embodiment of a bearing housing 402 that may be utilized within the disclosed bearing assembly 100 are illustrated in accordance with aspects of the present subject matter. Specifically, FIG. 12 illustrates a partial perspective view of the bearing housing 402 and FIG. 13 illustrates a cross-sectional side view of the bearing housing 402 shown in FIG. 12 taken about line 13-13.

As shown, the bearing housing 402 may be configured similarly to the bearing housings 102, 202, 302 described above with reference to FIGS. 2-11. For instance, the bearing housing 402 may generally radially between an inner end 416 and an outer end 418, with the bearing housing 402 including both a bearing support ring 420 disposed at or adjacent to its inner end 416 that is configured to surround the outer race 112 of the bearing 104 (FIG. 2) and a mounting flange 422 disposed at or adjacent to its outer end 418 for coupling the bearing housing 402 to the support frame 108 (FIG. 2) of the engine 10. In addition, the bearing housing 402 may include a plurality of inner spring fingers 430 and a plurality of outer spring fingers 432, with the inner spring fingers 430 extending axially between the bearing support ring 320 and a corresponding annular support beam 434 positioned at an aft end 438 of the bearing housing 402 and the outer spring fingers 432 extending axially between the mounting flange 422 to the support beam 434. Moreover, as particularly shown in FIG. 12, the inner spring fingers 430 may be configured to be circumferentially offset from the outer spring fingers 432.

However, unlike the embodiments described above with reference to FIGS. 2-11, both the inner and outer spring fingers 430, 432 may be configured to extend radially between the support beam 334 and their respective housing components. Specifically, as shown in the illustrated embodiment, each outer spring finger 432 may include a first outer axial portion 480 extending axially aft from the mounting flange 422, an outer radial portion 482 extending radially inwardly from the first outer axial portion 480 in the direction of the inner spring fingers 430 and a second outer axial portion 484 extending axially between from the outer radial portion 482 and the support bean 434. Additionally, each inner spring finger 430 may include a first inner axial portion 486 extending axially aft from the bearing support ring 420, an inner radial portion 488 extending radially outwardly from the first inner axial portion 486 in the direction of the outer spring fingers 432 and a second inner axial portion 490 extending axially between the outer radial portion 488 and the support beam 434. In such an embodiment, a height (not shown) of each radial portion 482, 488 of the inner and outer spring fingers 430, 432 may be selected such that the second outer axial portion 484 of the each outer spring finger 432 is at least partially radially aligned with the second inner axial portion 490 of the adjacent inner spring fingers 430. For instance, as shown in FIG. 13, the inner and outer spring fingers 430, 432 may be configured to extend radially towards one another such that the second inner and outer axial portions 484, 490 of the spring fingers 430, 432 are substantially radially aligned as they extend axially aft in the direction of the support beam 434. Additionally, as shown in FIGS. 12 and 13, given the configuration of the inner and outer spring fingers 430, 432, the support beam 334 may generally be configured to be positioned radially between the mounting flange 422 and the bearing support ring 422 of the bearing housing 402 (e.g., at a radial location between the first inner and outer axial portions 480, 486 of the spring fingers 430, 432).

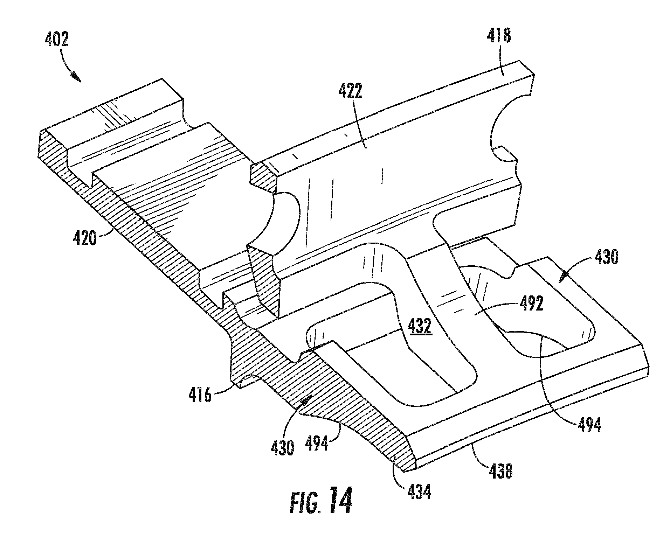

Referring now to FIG. 14, a perspective view of another embodiment of a bearing housing 402 that may be utilized within the disclosed bearing assembly 100 is illustrated in accordance with aspects of the present subject matter. Specifically, FIG. 14 illustrates a slight variation of the embodiment of the bearing housing 402 shown in FIGS. 12 and 13 and, as a result, the same reference characters are used in FIGS. 12-14 to identify corresponding components of the housings 402. As shown in FIG. 14, similar to the bearing housing 402 described above with reference to FIGS. 12 and 13, the support beam 434 of the bearing housing 402 is positioned radially between the mounting flange 422 and the bearing support ring 420. However, unlike the embodiment shown in FIGS. 12 and 13, the spring fingers 430, 432 define curved profiles as each spring finger 430, 432 extends axially and radially towards the support beam 434. Specifically, as shown in FIG. 14, an outer surface 492 of each outer spring finger 432 may define a radially inwardly curve profile extending substantially between the mounting flange 422 and the support beam 434 such that the outer spring fingers 432 extend inwardly in the direction of the adjacent inner spring fingers 430. Similarly, an inner surface 494 of each inner spring finger 430 may define a radially outwardly curve profile extending substantially between the bearing support ring 420 and the support beam 434 such that the inner spring fingers 430 extend outwardly in the direction of the adjacent outer spring fingers 432.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A bearing assembly for a gas turbine engine, the bearing assembly comprising:
a bearing (104) including an outer race (112) and an inner race (110); and
a bearing housing (102) extending radially between an inner end (116) and an outer end (118), the bearing housing (102) including a mounting flange (122) disposed at or adjacent to the outer end (118) and a bearing support ring (120) disposed at or adjacent to the inner end (116), the bearing support ring (120) being configured to at least partially surround the outer race (112) of the bearing (104), the bearing housing (102) further including a plurality of inner spring fingers (130) extending axially between the bearing support ring (120) and a support beam (134) of the bearing housing (102) and a plurality of outer spring fingers (132) extending axially between the mounting flange (122) and the support beam (134), at least a portion of each inner spring finger (130) being spaced apart radially from at least a portion of each outer spring finger (132),
wherein the inner spring fingers (130) are circumferentially offset from the outer spring fingers (132).

2. The bearing assembly as claimed in claim 1, wherein the inner spring fingers (130) are circumferentially spaced around a circumference of the bearing housing (102) such that an inner pocket (144) is defined between each pair of adjacent inner spring fingers (130).

3. The bearing assembly as claimed in claim 2, wherein each outer spring finger (132) is circumferentially aligned with one of the inner pockets (144) defined around the circumference of the bearing housing (102).

4. The bearing assembly as claimed in claim 2 or 3, wherein the support beam (234) is segmented around the circumference of the bearing housing (202) such that a channel (263) is defined between each inner pocket (244) and an aft end (23) of the bearing housing (202).

5. The bearing assembly as claimed in any preceding claim, wherein the bearing support ring (120) defines an inner bearing surface (124), the inner bearing surface (124) being configured to be disposed adjacent to the outer race (112) of the bearing (104).

6. The bearing assembly as claimed in any preceding claim, wherein the bearing housing (102) is formed from a material having a different coefficient of thermal expansion than a coefficient of thermal expansion of a material used to form at least one of the outer race (112) or the inner race (110) of the bearing (104).

7. The bearing assembly as claimed in claim 6, wherein the material used to form the bearing housing (102) has a lower coefficient of thermal expansion than the material used to form the at least one of the outer race (112) or the inner race (110).

8. The bearing assembly as claimed in claim 6 or 7, wherein the bearing housing (102) is formed from titanium and the inner and outer races (110,112) of the bearing (104) are formed from steel.

9. The bearing assembly as claimed in any preceding claim, wherein the outer spring fingers (132), the inner spring fingers (130), the support beam (134), the mounting flange (122) and the bearing support ring (134) are all formed integrally as a unitary component.

10. The bearing assembly as claimed in any preceding claim, wherein each of the outer spring fingers (132) extends radially inwardly relative to the mounting flange (122) such that at least a portion of each outer spring finger (132) is radially aligned with at least a portion of each inner spring finger (130).

11. The bearing assembly as claimed in any preceding claim, wherein each of the inner spring fingers (130) extends radially outwardly relative to the bearing support ring (134) such that at least a portion of each inner spring finger (130) is radially aligned with at least a portion of each outer spring finger (132).

12. The bearing assembly as claimed in any preceding claim, wherein each of the outer spring fingers (132) extends radially inwardly relative to the mounting flange (122) and wherein each of the inner spring fingers (130) extends radially outwardly relative to the bearing support ring (120) such that the support beam (134) is positioned radially between the mounting flange (122) and the bearing support ring (120).

13. The bearing assembly as claimed in any preceding claim, wherein the outer spring fingers (332) are circumferentially spaced around a circumference of the bearing housing (302) such that an outer pocket (346) is defined between each pair of adjacent outer spring fingers (332), wherein the support beam (334) is segmented around the circumference of the bearing housing (302) such that a channel (378) is defined between each outer pocket (346) and an aft end (338) of the bearing housing (302).

14. A gas turbine engine (10), comprising:
a rotor shaft (106);
a support frame (108) positioned radially outwardly from the rotor shaft (106);
and
a bearing assembly (100) configured to rotationally support the rotor shaft (106) relative to the support frame (108), the bearing assembly as defined in any preceding claim.
